# EUROPEAN PATENT APPLICATION

(11) **EP 4 481 585 A1**
(43) Date of publication of application: **25.12.2024**
(21) Application number: 23845391.4
(22) Date of filing: 19.07.2023
(51) Int. Cl.: G06F 16/44

(54) **MEDIA CONTENT DISPLAY METHOD AND APPARATUS, ELECTRONIC DEVICE AND STORAGE MEDIUM**

(30) Priority: 26.07.2022 CN 202210885853
(71) Applicant: Beijing Zitiao Network Technology Co., Ltd., Beijing 100190 (CN)
(72) Inventor: ZHAO, Jiarui, Beijing 100028 (CN)
(74) Representative: Dentons UK and Middle East LLP
(86) International application number: PCT/CN2023/108023
(87) International publication number: WO 2024/022179

(57) **Abstract**

Embodiments of the present disclosure provide a media content display method and apparatus, an electronic device, and a storage medium. The method includes: receiving a display operation for a first media content; and displaying, in response to the display operation and in a media content display page, the first media content, wherein the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

## Description

### CROSS-REFERENCE TO RELATED APPLICATION(S)

The present disclosure claims priority to Chinese Patent Application No. 202210885853.2, filed with the China National Intellectual Property Administration on July 26, 2022, which is incorporated herein by reference in its entirety.

### FIELD

Embodiments of the present disclosure relate to the field of computer technology, and for example, relate to a media content display method and apparatus, an electronic device, and a storage medium.

### BACKGROUND

Currently, a publisher may process different images using the same or different image filters and use processed images to generate image-text media contents.

In the related art, when a user views the image in the image-text media content, the user cannot know the image filter used for the currently viewed image, resulting in poor user experience.

### SUMMARY

Embodiments of the present disclosure provide a media content display method and apparatus, an electronic device, and a storage medium, providing convenience for a user to check a filter of a currently viewed image.

In a first aspect, an embodiment of the present disclosure provides a media content display method, including:
receiving a display operation for a first media content; and
displaying, in response to the display operation and in a media content display page, the first media content, where the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

In a second aspect, an embodiment of the present disclosure further provides a media content display apparatus, including:
an operation receiving module, configured to receive a display operation for a first media content; and
a media content displaying module, configured to display, in response to the display operation and in a media content display page, the first media content, where the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

In a third aspect, an embodiment of the present disclosure further provides an electronic device, including:
one or more processors; and
a memory, configured to store one or more programs, where
the one or more programs, when executed by the one or more processors, cause the one or more processors to implement the media content display method according to this embodiment of the present disclosure.

In a fourth aspect, an embodiment of the present disclosure further provides a computer-readable storage medium, storing a computer program. The computer program, when executed by a processor, implements the media content display method according to this embodiment of the present disclosure.

### BRIEF DESCRIPTION OF THE DRAWINGS

Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of a media content display method according to an embodiment of the present disclosure;
FIG. 2 is a schematic diagram of the display of a media content display page according to an embodiment of the present disclosure;
FIG. 3 is a schematic diagram of the display of another media content display page according to an embodiment of the present disclosure;
FIG. 4 is a schematic flowchart of another media content display method according to an embodiment of the present disclosure;
FIG. 5 is a schematic diagram of the display of a first processing control according to an embodiment of the present disclosure;
FIG. 6 is a schematic diagram of the display of a second processing control according to an embodiment of the present disclosure;
FIG. 7 is a schematic diagram of the display of another second processing control according to an embodiment of the present disclosure;
FIG. 8 is a schematic diagram of the display of a media content display page displaying a first sub-media content according to an embodiment of the present disclosure;
FIG. 9 is a schematic diagram of the display of a media content display page displaying a second sub-media content according to an embodiment of the present disclosure;
FIG. 10 is a schematic diagram of the display of an effect display window according to an embodiment of the present disclosure;
FIG. 11 is a structural block diagram of a media content display apparatus according to an embodiment of the present disclosure; and
FIG. 12 is a structural schematic diagram of an electronic device according to an embodiment of the present disclosure.

### DETAILED DESCRIPTION OF EMBODIMENTS

Embodiments of the present disclosure will be described with reference to the accompanying drawings below. Although the accompanying drawings show some embodiments of the present disclosure, it should be understood that the present disclosure may be implemented in various forms. It should be understood that the accompanying drawings and the embodiments of the present disclosure are for exemplary purposes only.

It should be understood that the steps recorded in the method implementations in the present disclosure may be performed in different orders and/or in parallel. Further, additional steps may be included and/or the execution of the illustrated steps may be omitted in the method implementations.

The term "including" used herein and variations thereof are open-ended, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". The related definitions of other terms will be provided in the subsequent description.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that modifications such as "a" and "a plurality of' mentioned in the present disclosure are indicative, and those skilled in the art should understand that unless otherwise explicitly specified in the context, it should be interpreted as "one or more".

The names of messages or information exchanged between a plurality of apparatuses in the implementations of the present disclosure are provided for illustrative purposes only, and are not used to limit the scope of these messages or information.

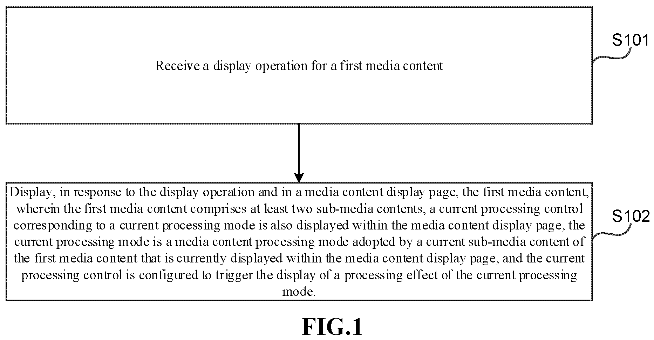

FIG. 1 is a schematic flowchart of a media content display method according to an embodiment of the present disclosure. The method may be performed by a media content display apparatus. The apparatus may be implemented by software and/or hardware, and may be configured in an electronic device, such as a mobile phone or a tablet personal computer. The media content display method provided in this embodiment of the present disclosure is applicable to a scenario where a media content processing mode adopted by a sub-media content in a media content is checked, such as a scenario where a media content processing mode adopted by an image in an image media content is checked. As shown in FIG. 1, the media content display method provided by this embodiment may include:
S 101: Receive a display operation for a first media content.

The first media content may be a currently displayed media content, which may be a media content, etc., composed of a plurality of sub-media contents. The sub-media content may be a video and/or an image. Correspondingly, the first media content may be an image-text media content composed of a plurality of images, a video content composed of a plurality of videos, or a combined media content composed of videos and images, etc. Taking the image-text media content as an example, the image-text media content may be formed by arranging a plurality of images in a certain order. During display, the plurality of images in the image-text media content may be sequentially switched to be displayed according to a set switching period (e.g., 1 s or 2 s) or a user switching operation. In this case, a switching period of the images in the image-text media content may be longer than a switching period of adjacent video frames in the video content.

The display operation for the first media content may be a trigger operation used to indicate the display of the first media content on a media content display page, such as a trigger operation of switching the media content displayed on the media content display page from other media contents in addition to the first media content to the first media content, or a trigger operation of switching a current page from other pages to the media content display page to display the first media content on the media content display page.

In this embodiment, the display operation for the first media content may be received to respond to the display operation.

S102: Display, in response to the display operation and in a media content display page, the first media content, where the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

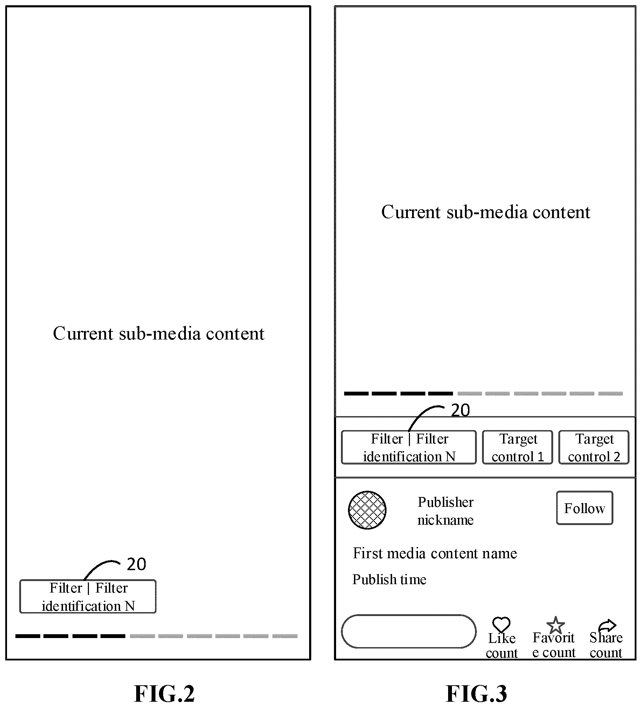

The media content display page may be a media content display page for displaying a plurality of media contents including the first media content, namely, a page with a corresponding media content stream, as shown in FIG. 2; or the media content display page may also be a media content display page only for displaying the first media content, such as a detail page of the first media content, as shown in FIG. 3.

The current sub-media content may be a sub-media content of the first media content that is currently displayed on the media content display page. It should be understood that as the first media content is displayed, the current sub-media content may change. The current processing mode may be a media content processing mode adopted by the current sub-media content. For example, the current processing mode includes at least one of a template, a filter, and an effect. That is, the current processing mode may be the template, the filter, and/or the effect adopted by a publisher of the first media content when processing the current sub-media content of the first media content. The current processing control may be a control corresponding to the current processing mode adopted by the current sub-media content. The control may be used to trigger the viewing of a processing effect of the current processing mode.

Exemplarily, when the display operation for the first media content is received, the first media content may be displayed on the media content display page in response to the display operation, for example, the sub-media content of the first media content is displayed on the media content display page; and the current processing control corresponding to the current processing mode adopted by the current sub-media content of the first media content that is currently displayed is displayed on the media content display page, such that the user can conveniently view, by triggering the current processing control, the processing effect of the current processing mode adopted by the current sub-media content, and adopt the current processing mode to perform media content processing.

Exemplarily, when the display operation is a media content switching operation, the current media content displayed on the media content display page may be switched to the first media content. The current sub-media content of the first media content, as well as the current processing control 20 corresponding to the current processing mode adopted by the current sub-media content, are displayed on a first media content display page, as shown in FIG. 2 (the current processing mode in the figure is exemplified by a filter). When the display operation is an operation of displaying the media content display page (e.g., a detail page) of the first media content, the current page may be switched to the media content display page of the first media content. The current sub-media content of the first media content and the current processing control 20 corresponding to the current processing mode adopted by the current sub-media content are displayed on the first media content display page, as shown in FIG. 3 (the current processing mode in the figure is exemplified by a filter).

It should be understood that when the current sub-media content is not processed by any media content processing mode, that is, when there is no current processing mode corresponding to the current sub-media content, the current processing control may not be displayed on the media content display page when the current sub-media content is displayed. When the current sub-media content adopts a plurality of types of processing modes, one or more processing modes adopted by the current sub-media content may be displayed in a first processing control. For example, one processing mode adopted by the current sub-media content may be taken as the current processing mode, and the current processing control corresponding to the current processing control is displayed.

In addition, the current processing control is displayed with the authorization of the publisher of the first media content. If the publisher of the first media content does not authorize the display of the processing control corresponding to the media content processing mode adopted by the sub-media content of the published first media content, for example, the publisher of the first media content does not authorize the present disclosure of the media content processing mode adopted by the sub-media content of the first media content, and regardless of whether the current sub-media content is a sub-media content processed by the media content processing mode, in this embodiment, the processing control corresponding to the media content processing mode adopted by the current sub-media content may not be displayed when the current sub-media content is displayed.

According to the media content display method provided by this embodiment, the display operation for the first media content is received; and the first media content is displayed on the media content display page in response to the display operation, where the first media content includes the at least two sub-media contents, the current processing control corresponding to the current processing mode is also displayed on the media content display page, the current processing mode is the media content processing mode adopted by the current sub-media content of the first media content that is currently displayed on the media content display page, and the current processing control is used to trigger the display of the processing effect of the current processing mode. By adopting the above technical solution in this embodiment, when the sub-media content of the media content is displayed, the processing control corresponding to the media content processing mode adopted by the sub-media content is displayed, thereby achieving a function of viewing the media content processing mode adopted by the currently displayed sub-media content, facilitating the user to view and use the media content processing mode adopted by the currently displayed sub-media content, and then enhancing user experience.

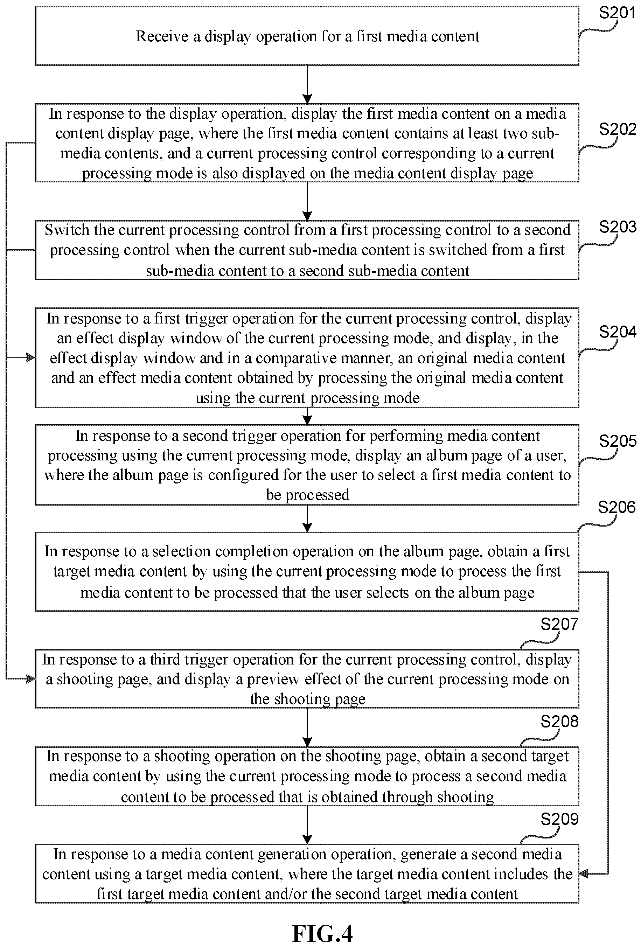

FIG. 4 is a schematic flowchart of another media content display method according to an embodiment of the present disclosure. The solution in this embodiment may be combined with one or more optional solutions in the above embodiment.

Optionally, the media content display method provided by this embodiment further includes: switching the current processing control from a first processing control to a second processing control when the current sub-media content is switched from a first sub-media content to a second sub-media content, where the first processing control corresponds to a first processing mode adopted by the first sub-media content, and the second processing control corresponds to a second processing mode adopted by the second sub-media content.

Optionally, after displaying the first media content on the media content display page, the method further includes: displaying an effect display window of the current processing mode in response to a first trigger operation for the current processing control, and in the effect display window, comparing the display of an original media content and an effect media content obtained by processing the original media content using the current processing mode.

Optionally, after displaying an effect display window of the current processing mode, the method further includes: displaying an album page of the user in response to a second trigger operation for performing media content processing using the current processing mode, where the album page is used for the user to select a first media content to be processed; and in response to a selection completion operation on the album page, using the current processing mode to process the first media content to be processed that the user selects on the album page, to obtain a first target media content.

Optionally, after displaying the first media content on the media content display page, the method further includes: displaying a shooting page in response to a third trigger operation for the current processing control, and displaying a preview effect of the current processing mode on the shooting page; and in response to a shooting operation on the shooting page, using the current processing mode to process a second media content to be processed that is obtained by shooting, to obtain a second target media content.

Optionally, the media content display method provided by this embodiment further includes: generating, in response to a media content generation operation, a second media content using a target media content, where the target media content includes the first target media content and/or the second target media content.

Correspondingly, as shown in FIG. 4, the media content display method provided by this embodiment may include:
S201: Receive a display operation for a first media content.
S202: Display, in response to the display operation, the first media content on the media content display page, and perform S203, S204, or S207, where the first media content includes at least two sub-media contents, a current processing control corresponding to a current processing mode is also displayed on the media content display page, the current processing mode is a media content processing mode adopted by a current sub-media content of the first media content that is currently displayed on the media content display page, and the current processing control is used to trigger the display of a processing effect of the current processing control.
S203: Switch the current processing control from a first processing control to a second processing control in response to the current sub-media content being switched from a first sub-media content to a second sub-media content, where the first processing control corresponds to a first processing mode adopted by the first sub-media content, and the second processing control corresponds to a second processing mode adopted by the second sub-media content.

The first sub-media content may be understood as a sub-media content of the first media content that is displayed on the media content display page before switching; and the second sub-media content may be understood as a sub-media content of the first media content that is displayed on the media content display page after switching. The first sub-media content and the second sub-media content may be any two sub-media contents of the first media content, and may be automatically switched when a set switching period is reached, or may be switched based on a trigger operation (e.g., a horizontal swipe operation or a tap operation) of the user for switching the sub-media content. The first processing mode may be a media content processing mode adopted by the first sub-media content; and the second processing mode may be a media content processing mode adopted by the second sub-media content. The first processing control may be a processing control corresponding to the first processing mode, which may be used to trigger the display of a processing effect of the first processing mode; and the second processing control may be a processing control corresponding to the second processing mode, which may be used to trigger the display of a processing effect of the second processing mode.

In this embodiment, when the sub-media content displayed on the media content display page is switched, such as switching from the first sub-media content to the second sub-media content, the current processing control displayed on the media content display page may be synchronously switched, thereby facilitating the user to view or reuse the media content processing mode for the currently displayed sub-media content.

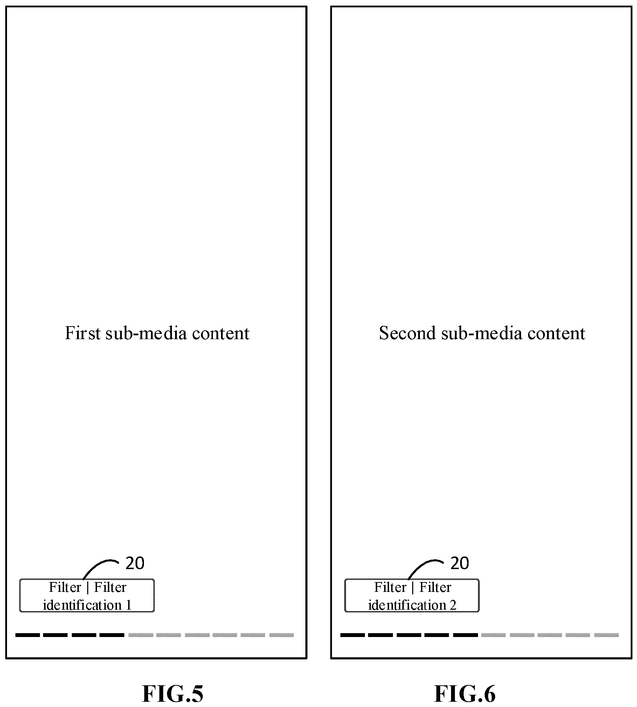

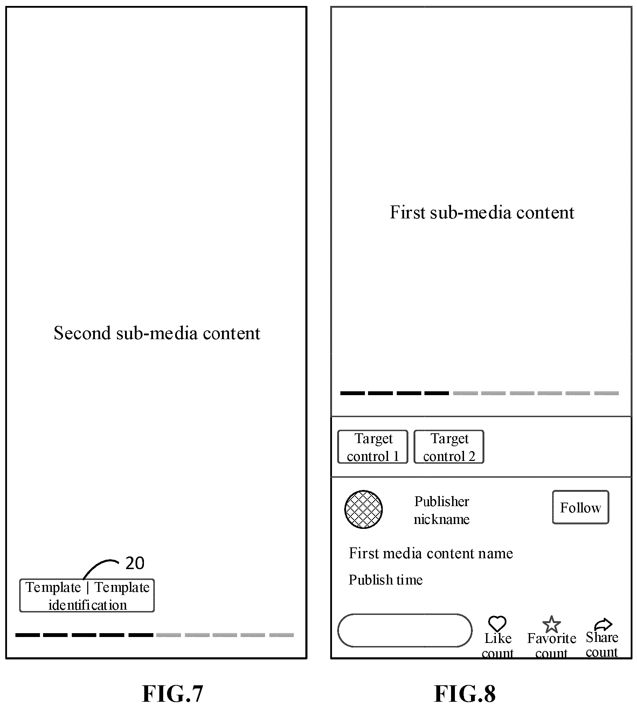

Exemplarily, when the set switching period is reached, for example, when a display duration of the first sub-media content reaches a set duration, the current sub-media content displayed on the media content display page may be automatically switched from the first sub-media content to the second sub-media content, and the current processing control 20 displayed on the media content display page is switched from a first processing control (as shown in FIG. 5) to a second processing control (as shown in FIG. 6 and FIG. 7); and/or, when a trigger operation of the user for switching the sub-media content is received, the current sub-media content displayed on the media content display page is switched from the first sub-media content to the second sub-media content, and the current processing control displayed on the media content display page is switched from the first processing control (as shown in FIG. 5) to the second processing control (as shown in FIG. 6 and FIG. 7).

In an implementation, the switching the current processing control from a first processing control to a second processing control includes: canceling the display of the first processing control and displaying the second processing control; or switching a current associated content displayed in the current processing control from a first associated content to a second associated content, so as to switch the current processing control from the first processing control to the second processing control, where the first associated content is an associated content of the first processing mode, and the second associated content is an associated content of the second processing mode.

In the above implementation, a switching method for switching the current processing control displayed on the media content display page from the first processing control to the second processing control may be flexibly set. For example, the display of the first processing control may be canceled, and the second processing control is displayed; or, the first associated content displayed in the first processing control is switched to the second associated content, and the current processing control is kept displayed in the switching process, thereby reducing the interference caused by control switching to the user during viewing the first media content.

The first associated content may be a content that is displayed in the first processing control and is associated with the first processing mode. The second associated content may be a content that is displayed in the second processing control and is associated with the second processing mode. The current associated content may be a content that is displayed in the current processing control and is associated with the current processing mode. An associated content of a media content processing mode (e.g., the first processing mode or the second processing mode) may include, for example, a type identification of a type (e.g., a template, a filter, or an effect) corresponding to the media content processing mode and a processing mode identification (e.g., a Template identification, a filter identification, or an effect identification) of the media content processing mode.

Exemplarily, when the first processing mode and the second processing mode are the same type of media content processing mode, for example, when both the first processing mode and the second processing mode are template filters or effects, the current processing control may be kept displayed, and the first associated content displayed in the current processing control is switched to the second associated content, so as to switch the current processing control from the first processing control to the second processing control; and when the first processing mode and the second processing mode are different types of media content processing modes, the display of the first processing control may be canceled and the second processing control is displayed, so as to switch the current processing control from the first processing control to the second processing control.

In this embodiment, a switching method for switching the current associated content from the first associated content to the second associated content may be flexibly set. For example, when the first processing mode and the second processing mode are the same type of media content processing mode, the display of the first associated content may be canceled and the second associated content is displayed. For example, the type identification of the first processing mode (e.g., "filter" shown in FIG. 5 and FIG. 6) may be kept displayed, and only the processing mode identification of the first processing mode (e.g., "filter identification 1" shown in FIG. 5) is switched to the processing mode identification of the second processing mode (e.g., "filter identification 2" shown in FIG. 6), thereby reducing the interference caused by control switching to the user. When the first processing mode and the second processing mode are different types of media content processing modes, the display of the first associated content (e.g.,"filter|filter identification 1" shown in FIG. 5) may be canceled and the second associated content (e.g., "template|template identification" shown in FIG. 7, where the second processing mode is used as an example of a template in FIG. 7) is displayed.

In this case, optionally, the current associated content includes a type identification and a processing mode identification of the current processing mode. The switching the current associated content displayed in the current processing control from the first associated content to the second associated content includes: if a first type identification of the first processing mode is the same as a second type identification of the second processing mode, switching the first processing mode identification displayed in the current processing control to the second processing mode identification for display; and/or, if the first type identification of the first processing mode is different from the second type identification of the second processing mode, canceling the display of the first associated content in the current processing control, and displaying the second associated content in the current processing control.

The first type identification may be the type identification of the first processing mode, and the second type identification may be the type identification of the second processing mode. A type identification of a media content processing mode may be used to identify the processing mode type that the media content processing mode belongs to. When two media content processing modes are the same type of media content processing mode, the two media content processing modes have the same type identification. The first processing mode identification may be the processing mode identification of the first processing mode, the second processing mode identification may be the processing mode identification of the second processing mode, and a processing mode identification of a media content processing mode may be used to uniquely identify the media content processing mode.

In an exemplary implementation, when the first processing mode and the second processing mode are the same type of media content processing mode, the current processing control and the type identification in the current processing control may be kept displayed, and the first processing mode identification in the current processing control is switched to the second processing mode identification, such as canceling the display of the first processing mode identification, and displaying the second processing mode identification; and when the first processing mode and the second processing mode are different types of media content processing modes, the display of the first processing control may be canceled and the second processing control is displayed.

In this embodiment, the current processing control may be switched from the first processing control to the second processing control only when an adopted first sub-media content processing mode exists in the first sub-media content and an adopted second processing mode exists in the second sub-media content, that is, both the first sub-media content and the second sub-media content are sub-media contents obtained by processing using the corresponding media content processing modes. In this case, optionally, the switching the current processing control from a first processing control to a second processing control includes: switching the current processing control from the first processing control to the second processing control if there are the first processing mode and the second processing mode.

Correspondingly, when the adopted first processing mode does not exist in the first sub-media content and the adopted second processing mode does exist in the second sub-media content, the current processing control may be kept not displayed on the media content display page when the current sub-media content is switched from the first sub-media content to the second sub-media content.

When the adopted first processing mode exists in the first sub-media content and the adopted second processing mode does exist in the second sub-media content, the display of the current processing control may be canceled. That is, when the current sub-media content is switched from the first sub-media content to the second sub-media content, the display of the first processing control is stopped, such as stopping the display of the first processing control and adjusting a display position of a target control displayed in a preset area. Alternatively, the display of the first processing control and the target control displayed in the preset area is first stopped, and then the target control is displayed in the preset area again based on a display position of the target control in the preset area when the current processing control is not displayed. In this case, the media content display method provided by this embodiment may also include: canceling the display of the first processing control if the first processing mode exists and the second processing mode does not exist.

When the adopted first processing mode does not exist in the first sub-media content and the adopted second processing mode exists in the second sub-media content, the current processing control may be added to the media content display page to be displayed when the current sub-media content is switched from the first sub-media content to the second sub-media content. That is, the second processing control is added to the media content display page to be displayed. In this case, the media content display method provided by this embodiment may also include: additionally displaying the second processing control in a preset area of the media content display page if the first processing mode does not exist and the second processing mode exists.

The preset area may be an area where the current processing control is located, which may be within or outside a display area where the current sub-media content is located. That is, the current processing control 20 may be displayed within the display area where the current sub-media content is located, such as on an upper layer of the current sub-media content, as shown in FIG. 2. Alternatively, the current processing control 20 may be displayed outside the display area where the current sub-media content is located, as shown in FIG. 3. The preset area may be only used to display the current processing control, or may also be only used to display the target control in addition to the current processing control. The target control may be another control used for display in the preset area in addition to the current processing control, such as a position control used to trigger viewing of position information corresponding to the first media content and/or a music control used to trigger viewing of background music information of the first media content.

In this embodiment, when the preset area is only used to display the current processing control, the second processing control may be directly added to be displayed in the preset area. When the preset area is also used to display the target control, if no target control is displayed in the preset area, the second processing control may be directly added to be displayed in the preset area; and when the target control is displayed in the preset area, the second processing control may be displayed, and the display position of the target control is adjusted.

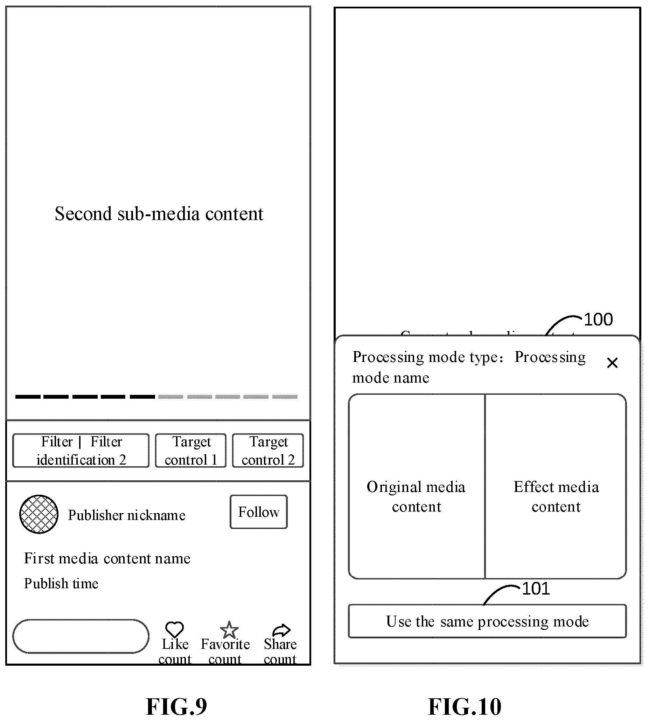

In an implementation, in the process of adding the second processing control for display, when the current sub-media content is switched from the first sub-media content to the second sub-media content, the target control is kept displayed, and the display position of the target control is adjusted based on a display position of the second processing control. Assuming that as shown in FIG. 8, a target control 1 and a target control 2 are displayed in the preset area. When the second processing control is added to be displayed, the second processing control may be added to be displayed at a preset display position in the preset area (e.g., a left side of the preset area), and the target control 1 and the target control 2 are controlled to move, so as to adjust display positions of the target control 1 and the target control 2, as shown in FIG. 9. In this case, optionally, the additionally displaying of the second processing control in a preset area of the media content display page includes: if a target control in addition to the second processing control is displayed in the preset area, keeping the display of the target control, displaying the second processing control at a preset display position of the preset area, and adjusting a display position of the target control in the preset area based on the preset display position. The preset display position may be understood as the display position of the second processing control in the preset area.

In another implementation, in the process of adding the second processing control for display, when the current sub-media content is switched from the first sub-media content to the second sub-media content, the display of the target control may be canceled, and then, a second position control and the target control are simultaneously displayed in the preset area, thereby avoiding the interference caused by the movement of the target control to the user. Assuming that as shown in FIG. 8, the target control 1 and the target control 2 are displayed in the preset area. When the second processing control is added to be displayed, the display of the target control 1 and the target control 2 may be first stopped, then, the second processing control is displayed at the preset display position of the preset area (e.g., the left side of the preset area), and meanwhile, the target control 1 and the target control 2 are displayed at the target display position of the preset area again, as shown in FIG. 9. In this case, optionally, the additionally displaying of the second processing control in a preset area of the media content display page includes: if a target control in addition to the second processing control is displayed in the preset area, canceling the display of the target control, displaying the second processing control at the preset display position of the preset area, and displaying the target control at the target display position of the preset area again. The target display position may be understood as the display position of the target control in the preset area after additionally displaying the second processing control.

S204: In response to a first trigger operation for the current processing control, display an effect display window of the current processing mode, and display, in the effect display window and in a comparative manner, an original media content and an effect media content obtained by processing the original media content using the current processing mode.

The first trigger operation may be an operation used to indicate the display of the effect display window of the current processing mode, which may be an operation on the current processing control. The original media content may be a media content that is preset and is not processed using the current processing mode, such as an image and/or a video. The effect media content may be a media content obtained by processing the original media content using the current processing mode.

In this embodiment, the processing effect of the current processing mode may be displayed in the effect display window.

Exemplarily, when the first trigger operation for the current processing control is received, the effect display window 100 of the current processing mode may be displayed in response to the first trigger operation, and the original media content before processing with the current processing mode and the effect media content processed using the current processing mode are displayed in the effect display window 100, as shown in FIG. 10, such that the user may compare and view the original media content and the effect media content, thereby clarifying the processing effect of the current processing mode.

S205: In response to a second trigger operation for performing media content processing using the current processing mode, display an album page of the user, where the album page is configured for selecting a first media content to be processed by the user.

The second trigger operation may be a trigger operation for performing media content processing using the current processing mode, such as an operation that triggers a use control in the effect display window.

Exemplarily, in the case of receiving the second trigger operation, for example, when it is detected that the user triggers the use control 101 (as shown in FIG. 10) in the effect display window 100, the album page of the user may be displayed, such as displaying a local album of the user, thereby allowing the user to select a media content that needs to be processed using the current processing mode.

In addition, when the second trigger operation is received, a current page may also be switched to a shooting page, and the current processing mode is selected on the shooting page, such that the user may obtain a media content with the processing effect by shooting.

S206: In response to a selection completion operation on the album page, obtain a first target media content by using the current processing mode to process the first media content to be processed that the user selects on the album page, and perform S209.

The selection completion operation may be an operation used to indicate the completion of media content selection, such as an operation that triggers a confirmation control in the album page. The first media content to be processed may be a media content selected by the user on the album page, namely, a media content in a selected state on the album page when the selection completion operation is received. The first media content to be processed may be an image and/or a video. The first target media content may be a media content obtained by processing the first media content to be processed using the current processing mode.

In this embodiment, the user may select one or more first media contents to be processed that need to be processed on the album page, and perform the selection completion operation after the selection is completed. Correspondingly, when an application receives the selection completion operation of the user, the current processing mode may be adopted to process the first media content to be processed that the user selects on the album page, to obtain the first target media content.

S207: In response to a third trigger operation for the current processing control, display a shooting page, and display a preview effect of the current processing mode on the shooting page.

The third trigger operation may be an operation used to indicate the display of the preview effect of the current processing mode on the shooting page, which may be an operation on the current processing control. The third trigger operation and the first trigger operation may be the same or different trigger operations, and for example, may be different trigger operations.

In this embodiment, the processing effect of the current processing mode may also be displayed on the shooting page.

Exemplarily, when the third trigger operation for the current processing control is received, the current page may be switched from the media content display page to the shooting page in response to the third trigger operation, and the preview effect of the current processing mode is displayed on the shooting page, such that the user may view the processing effect of the current processing mode and obtain the media content with the processing effect by shooting.

S208: In response to a shooting operation on the shooting page, obtain a second target media content by using the current processing mode to process a second media content to be processed that is obtained through shooting.

Exemplarily, when the shooting operation on the shooting page is received, the second media content to be processed, which is captured by a camera, may be obtained. The current processing mode is adopted to process the second media content to be processed, to obtain the second target media content. The second media content to be processed may be a media content captured by the camera, and the second target media content may be a media content obtained after processing the second media content to be processed using the current processing mode.

S209: In response to a media content generation operation, generate a second media content using a target media content, where the target media content comprises at least one of the first target media content and the second target media content.

The media content generation operation may be an operation of generating a new media content using the processed target media content. The target media content may include the first target media content and/or the second target media content processed using the current processing mode. The second media content may be a media content generated using the target media content.

In this embodiment, the user may perform media content processing using the media content processing mode adopted by the media content in the currently viewed media content, thereby creating a new media content.

Exemplarily, when the target media content is generated, the target media content may be displayed to the user, and when it is detected that the user triggers a media content generation control, the second media content is generated using the target media content. Alternatively, when it is detected that the user triggers a "Next" control, an editing page is displayed for the user to edit the target media content, and when it is detected that the user triggers a "Generate" control or a "Publish" control, the second media content is generated using the edited target media content. Further, after the second media content is generated, the second media content may be published, or published in response to a publishing operation of the user.

According to the media content display method provided by this embodiment, when the current sub-media content is switched, the current processing control displayed on the media content display page is switched; and when the trigger operation on the current processing control is received, the processing effect of the current processing mode is displayed, media content processing may be performed using the current processing mode to obtain the target media content, and the new media content is generated using the target media content, thereby reducing the difficulty of viewing the processing effect and creating the media content, and enhancing the user experience.

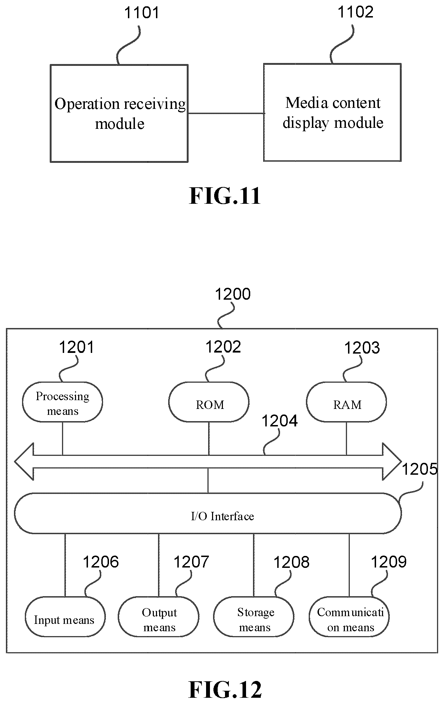

FIG. 11 is a structural block diagram of a media content display apparatus according to an embodiment of the present disclosure. The apparatus may be implemented by software and/or hardware, and may be configured in an electronic device, such as a mobile phone or a tablet personal computer. A current processing control may be displayed by performing the media content display method. As shown in FIG. 11, the media content display apparatus provided by this embodiment may include an operation receiving module 1101 and a media content display module 1102.

The operation receiving module 1101 is configured to receive a display operation for a first media content; and

the media content display module 1102 is configured to display, in response to the display operation and in a media content display page, the first media content, where the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

According to the media content display apparatus provided by this embodiment, the operation receiving module receives the display operation for the first media content; and the media content display module displays the first media content on the media content display page in response to the display operation, where the first media content includes the at least two sub-media contents, the current processing control corresponding to the current processing mode is also displayed on the media content display page, the current processing mode is the media content processing mode adopted by the current sub-media content of the first media content that is currently displayed on the media content display page, and the current processing control is used to trigger the display of the processing effect of the current processing mode. By adopting the above technical solution in this embodiment, when the sub-media content of the media content is displayed, the processing control corresponding to the media content processing mode adopted by the sub-media content is displayed, thereby achieving a function of viewing the media content processing mode adopted by the currently displayed sub-media content, facilitating the user to view and use the media content processing mode adopted by the currently displayed sub-media content, and then enhancing user experience.

The media content display apparatus provided by this embodiment further includes: a control switching module, configured to switch the current processing control from a first processing control to a second processing control in response to the current sub-media content being switched from a first sub-media content to a second sub-media content, where the first processing control corresponds to a first processing mode adopted by the first sub-media content, and the second processing control corresponds to a second processing mode adopted by the second sub-media content.

In the above solution, the control switching module may include: a first switching unit, configured to cancel the display of the first processing control and displaying the second processing control; or a second switching unit, configured to switch the current processing control from the first processing control to the second processing control by switching a current associated content displayed in the current processing control from a first associated content to a second associated content, where the first associated content is an associated content of the first processing mode, and the second associated content is an associated content of the second processing mode.

In the above solution, the current associated content may include a type identification and a processing mode identification of the current processing mode. The second switching unit is configured to switch the current associated content displayed in the current processing control from the first associated content to the second associated content through the following method: in response to a first type identification of the first processing mode being the same as a second type identification of the second processing mode, switching the first processing mode identification of the first processing mode displayed in the current processing control to the second processing mode identification of the second processing mode for displaying; and/or, in response to the first type identification of the first processing mode being different from the second type identification of the second processing mode, canceling the display of the first associated content in the current processing control, and displaying the second associated content in the current processing control.

In the above solution, the control switching module is configured to switch the current processing control from a first processing control to a second processing control through the following method: in response to the existence of the first processing mode and the second processing mode, switching the current processing control from the first processing control to the second processing control.

The media content display apparatus provided by this embodiment may also include: a display adding module, configured to in response to the inexistence of the first processing mode and the existence of the second processing mode, additionally display the second processing control in a preset area of the media content display page.

In the above solution, the display adding module is configured to additionally display second processing control in a preset area of the media content display page through the following method: in response to the display of a target control in addition to the second processing control in the preset area, keeping the display of the target control and displaying the second processing control at a preset display position of the preset area, and adjusting a display position of the target control in the preset area based on the preset display position; or, in response to the display of a target control in addition to the second processing control in the preset area, canceling the display of the target control and displaying the second processing control at a preset display position of the preset area, and redisplaying the target control at a target display position of the preset area.

The media content display apparatus provided by this embodiment may also include: a window display module, configured to in response to a first trigger operation for the current processing control, display an effect display window of the current processing mode, and display, in the effect display window and in a comparative manner, an original media content and an effect media content obtained by processing the original media content using the current processing mode.

The media content display apparatus provided by this embodiment may also include: an album display module, configured to in response to a second trigger operation for performing media content processing using the current processing mode, display an album page of the user, where the album page is configured for selecting a first media content to be processed by the user; and a first processing module, configured to in response to a selection completion operation on the album page, obtain a first target media content by using the current processing mode to process the first media content to be processed that the user selects on the album page.

The media content display apparatus provided by this embodiment may also include: a shooting page display module, configured to in response to a third trigger operation for the current processing control, display a shooting page, and display a preview effect of the current processing mode on the shooting page after the displaying the first media content on the media content display page; and a second processing module, configured to in response to a shooting operation on the shooting page, obtain a second target media content by using the current processing mode to process a second media content to be processed that is obtained through shooting.

The media content display apparatus provided by this embodiment may also include: a media content generation module, configured to in response to a media content generation operation, generate a second media content using a target media content, where the target media content comprises at least one of the first target media content and the second target media content.

In the above solution, the current processing mode may include at least one of a template, a filter, and an effect.

The media content display apparatus provided by this embodiment of the present disclosure may perform the media content display method provided by any embodiment of the present disclosure and has the corresponding functional modules and beneficial effects for performing the media content display method. For technical details that are not described in detail in this embodiment, reference may be made to the media content display method provided by any embodiment of the present disclosure.

Referring to FIG. 12 below, FIG. 12 illustrates a structural schematic diagram of an electronic device (e.g., a terminal device) 1200 suitable for implementing an embodiment of the present disclosure. The terminal device in this embodiment of the present disclosure may include mobile terminals such as a mobile phone, a notebook computer, a digital radio receiver, a personal digital assistant (PDA), a portable Android device (PAD), a portable media player (PMP), and a vehicle-mounted terminal (e.g., a vehicle-mounted navigation terminal), and fixed terminals such as a digital television (TV) and a desk computer. The electronic device shown in FIG. 12 is merely an example.

As shown in FIG. 12, the electronic device 1200 may include a Processing means (e.g., a central processing unit and a graphics processing unit) 1201. The Processing means 1201 may perform various appropriate actions and processing according to programs stored in a read only memory (ROM) 1202 or loaded from a Storage means 1208 into a random access memory (RAM) 1203. The RAM 1203 further stores various programs and data required for the operation of the electronic device 1200. The Processing means 1201, the ROM 1202, and the RAM 1203 are connected to one another through a bus 1204. An input/output (I/O) interface 1205 is also connected to the bus 1204.

Typically, the following apparatuses may be connected to the I/O interface 1205: an Input means 1206, including, for example, a touchscreen, a touchpad, a keyboard, a mouse, a camera, a microphone, an accelerometer, and a gyroscope; an Output means 1207, including, for example, a liquid crystal display (LCD), a speaker, and a vibrator; the Storage means 1208, including, for example, a magnetic tape and a hard drive; and a communication apparatus 1209. The communication apparatus 1209 may allow the electronic device 1200 to be in wireless or wired communication with other devices for data exchange. Although FIG. 12 illustrates the electronic device 1200 with various apparatuses, it should be understood that it is not necessary to implement or have all the shown apparatuses. Alternatively, more or fewer apparatuses may be implemented or provided.

In an embodiment, according to this embodiment of the present disclosure, the foregoing process described with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such embodiment, the computer program may be downloaded and installed from the network through the communication apparatus 1209, or installed from the Storage means 1208, or installed from the ROM 1202. The computer program, when executed by the Processing means 1201, performs the above functions defined in the method in the embodiments of the present disclosure.

It should be noted that the computer-readable medium in the present disclosure may be a computer-readable signal medium, or a computer-readable storage medium, or any combination thereof. For example, the computer-readable storage medium may include: electrical, magnetic, optical, electromagnetic, infrared, or semiconductor systems, apparatuses, or devices, or any combination of the above. Examples of the computer-readable storage medium may include: an electrical connection with one or more wires, a portable computer disk, a hard drive, a random access memory (RAM), a read only memory (ROM), an erasable programmable read only memory (EPROM) or a flash memory, fiber optics, a portable compact disc-read only memory (CD-ROM), an optical storage device, a magnetic storage device, or any suitable combination of the above. In the present disclosure, the computer-readable storage medium may be a tangible medium including or storing a program, and the program may be used by or in conjunction with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including an electromagnetic signal, an optical signal, or any suitable combination thereof. The computer-readable signal medium may also be any computer-readable medium other than the computer-readable storage medium. The computer-readable signal medium may send, propagate, or transmit a program used by or in conjunction with the instruction execution system, apparatus, or device. The program code included in the computer-readable medium may be transmitted by a suitable medium including a wire, an optical cable, radio frequency (RF), etc., or a proper combination of the above.

In some implementations, a client and a server may communicate using any currently known or future-developed network protocols such as a hypertext transfer protocol (HTTP), and may also be interconnected with digital data communication in any form or medium (e.g., a communication network). For example, the communication network includes a local area network (LAN), a wide area network (WAN), Internet work (e.g., Internet), a peer-to-peer network (e.g., an ad hoc peer-to-peer network), and any currently known or future-developed networks.

The computer-readable medium may be included in the above electronic device; or may also separately exist without being assembled in the electronic device.

The above computer-readable medium carries at least one program, and the at least one program, when executed by the electronic device, causes the electronic device to: receive a display operation for a first media content; and display, in response to the display operation, the first media content on a media content display page, where the first media content includes at least two sub-media contents, a current processing control corresponding to a current processing mode is also displayed on the media content display page, the current processing mode is a media content processing mode adopted by a current sub-media content of the first media content that is currently displayed on the media content display page, and the current processing control is used to trigger the display of a processing effect of the current processing control.

The computer program code for performing the operations of the present disclosure may be written in one or more programming languages or a combination thereof. The programming languages include object-oriented programming languages such as Java, Smalltalk, C++, as well as conventional procedural programming languages such as "C" language or similar programming languages. The program code may be executed entirely on a user computer, partly on the user computer, as a stand-alone software package, partly on the user computer and partly on a remote computer, or entirely on the remote computer or the server. In the case of involving the remote computer, the remote computer may be connected to the user computer through any type of network, including a local area network (LAN) or a wide area network (WAN), or may be connected to an external computer (e.g., utilizing an Internet service provider for Internet connectivity).

The flowcharts and the block diagrams in the accompanying drawings illustrate the possibly implemented system architecture, functions, and operations of the system, the method, and the computer program product according to the various embodiments of the present disclosure. In this regard, each block in the flowcharts or the block diagrams may represent a module, a program segment, or a part of code, and the module, the program segment, or the part of code includes one or more executable instructions for implementing specified logic functions. It should also be noted that in some alternative implementations, the functions marked in the blocks may also occur in an order different from that marked in the accompanying drawings. For example, two consecutively-shown blocks may actually be executed in parallel basically, but sometimes may also be executed in a reverse order, which depends on involved functions. It should also be noted that each block in the block diagrams and/or the flowcharts, and a combination of the blocks in the block diagrams and/or the flowcharts may be implemented by using a dedicated hardware-based system that performs specified functions or operations, or may be implemented by using a combination of dedicated hardware and computer instructions.

The related units described in the embodiments of the present disclosure may be implemented by software or hardware. The name of the module does not limit the unit in certain cases.

Herein, the functions described above may be at least partially executed by at least one hardware logic component. For example, exemplary hardware logic components that can be used include: a field-programmable gate array (FPGA), an application specific integrated circuit (ASIC), application specific standard parts (ASSPs), a system on chip (SOC), a complex programmable logic device (CPLD), etc.

In the context of the present disclosure, a machine-readable medium may be a tangible medium that may include or store a program used by or in conjunction with the instruction execution system, apparatus, or device. The machine-readable medium may be a machine-readable signal medium or a machine-readable storage medium. The machine-readable medium may include: electronic, magnetic, optical, electromagnetic, infrared, or semiconductor systems, apparatuses, or devices, or a suitable combination of the above content. Examples of the machine-readable storage medium may include: an electrical connection based on one or more wires, a portable computer disk, a hard drive, a random access memory (RAM), a read only memory (ROM), an erasable programmable read only memory (EPROM or a flash memory), fiber optics, a portable compact disc-read only memory (CD-ROM), an optical storage device, a magnetic storage device, or a suitable combination of the above content.

According to one or more embodiments of the present disclosure, Example 1 provides a media content display method, including:
receiving a display operation for a first media content; and
displaying, in response to the display operation and in a media content display page, the first media content, where the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

According to one or more embodiments of the present disclosure, Example 2 provides the method according to Example 1, further including:
switching the current processing control from a first processing control to a second processing control in response to the current sub-media content being switched from a first sub-media content to a second sub-media content, where the first processing control corresponds to a first processing mode adopted by the first sub-media content, and the second processing control corresponds to a second processing mode adopted by the second sub-media content.

According to one or more embodiments of the present disclosure, Example 3 provides the method according to Example 2, where the switching the current processing control from a first processing control to a second processing control includes:
canceling the display of the first processing control and displaying the second processing control; or
switching the current processing control from the first processing control to the second processing control by switching a current associated content displayed in the current processing control from a first associated content to a second associated content, where the first associated content is an associated content of the first processing mode, and the second associated content is an associated content of the second processing mode.

According to one or more embodiments of the present disclosure, Example 4 provides the method according to Example 3, where the current associated content includes a type identification and a processing mode identification of the current processing mode, and the switching the current associated content displayed in the current processing control from the first associated content to the second associated content includes:
in response to a first type identification of the first processing mode being the same as a second type identification of the second processing mode, switching the first processing mode identification of the first processing mode displayed in the current processing control to the second processing mode identification of the second processing mode for displaying; and
in response to the first type identification of the first processing mode being different from the second type identification of the second processing mode, canceling the display of the first associated content in the current processing control, and displaying the second associated content in the current processing control.

According to one or more embodiments of the present disclosure, Example 5 provides the method according to Example 2, where the switching the current processing control from a first processing control to a second processing control includes:
in response to the existence of the first processing mode and the second processing mode, switching the current processing control from the first processing control to the second processing control.

According to one or more embodiments of the present disclosure, Example 6 provides the method according to Example 5, further including:
in response to the inexistence of the first processing mode and the existence of the second processing mode, additionally displaying the second processing control in a preset area of the media content display page.

According to one or more embodiments of the present disclosure, Example 7 provides the method according to Example 6, where the adding the display of the second processing control in a preset area of the media content display page includes:
in response to the display of a target control in addition to the second processing control in the preset area, keeping the display of the target control and displaying the second processing control at a preset display position of the preset area, and adjusting a display position of the target control in the preset area based on the preset display position; or,
in response to the display of a target control in addition to the second processing control in the preset area, canceling the display of the target control and displaying the second processing control at a preset display position of the preset area, and redisplaying the target control at a target display position of the preset area.

According to one or more embodiments of the present disclosure, Example 8 provides the method according to Example 1, where after the displaying the first media content on the media content display page, the method further includes:
in response to a first trigger operation for the current processing control, displaying an effect display window of the current processing mode, and displaying, in the effect display window and in a comparative manner, an original media content and an effect media content obtained by processing the original media content using the current processing mode.

According to one or more embodiments of the present disclosure, Example 9 provides the method according to Example 8, where after the displaying an effect display window of the current processing mode, the method further includes:
in response to a second trigger operation for performing media content processing using the current processing mode, displaying an album page of the user, where the album page is configured for selecting a first media content to be processed by the user; and
in response to a selection completion operation on the album page, obtaining a first target media content by using the current processing mode to process the first media content to be processed that the user selects on the album page.

According to one or more embodiments of the present disclosure, Example 10 provides the method according to Example 1, where after the displaying the first media content on the media content display page, the method further includes:
in response to a third trigger operation for the current processing control, displaying a shooting page, and displaying a preview effect of the current processing mode on the shooting page; and
in response to a shooting operation on the shooting page, obtaining a second target media content by using the current processing mode to process a second media content to be processed that is obtained through shooting.

According to one or more embodiments of the present disclosure, Example 11 provides the method according to Example 9 or 10, further including:
in response to a media content generation operation, generating a second media content using a target media content, where the target media content comprises at least one of the first target media content and the second target media content.

According to one or more embodiments of the present disclosure, Example 12 provides the method according to any one of Examples 1 to 10, where the current processing mode includes at least one of a template, a filter, and an effect.

According to one or more embodiments of the present disclosure, Example 13 provides a media content display apparatus, including:
an operation receiving module, configured to receive a display operation for a first media content; and
a media content display module, configured to display, in response to the display operation and in a media content display page, the first media content, where the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

According to one or more embodiments of the present disclosure, Example 14 provides an electronic device, including:
one or more processors; and
a memory, configured to store one or more programs, where
the one or more programs, when executed by the one or more processors, cause the one or more processors to implement the media content display method according to any one of Examples 1 to 12.

According to one or more embodiments of the present disclosure, Example 15 provides a computer-readable storage medium, storing a computer program. The computer program, when executed by a processor, implements the media content display method according to any one of Examples 1 to 12.

In addition, although the various operations are depicted in a specific order, it should not be understood as requiring these operations to be performed in the shown particular order or in a sequential order. In certain environments, multitasking and parallel processing may be advantageous.

## Claims

1. A media content display method, comprising:
receiving a display operation for a first media content; and
displaying, in response to the display operation and in a media content display page, the first media content, wherein the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

2. The method according to claim 1, further comprising:
switching the current processing control from a first processing control to a second processing control in response to the current sub-media content being switched from a first sub-media content to a second sub-media content, wherein the first processing control corresponds to a first processing mode adopted by the first sub-media content, and the second processing control corresponds to a second processing mode adopted by the second sub-media content.

3. The method according to claim 2, wherein switching the current processing control from the first processing control to the second processing control comprises:
canceling the display of the first processing control and displaying the second processing control; or
switching the current processing control from the first processing control to the second processing control by switching a current associated content displayed in the current processing control from a first associated content to a second associated content, wherein the first associated content is an associated content of the first processing mode, and the second associated content is an associated content of the second processing mode.

4. The method according to claim 3, wherein the current associated content comprises a type identification and a processing mode identification of the current processing mode, and switching the current associated content displayed in the current processing control from the first associated content to the second associated content comprises at least one of:
in response to a first type identification of the first processing mode being the same as a second type identification of the second processing mode, switching the first processing mode identification of the first processing mode displayed in the current processing control to the second processing mode identification of the second processing mode for displaying; and
in response to the first type identification of the first processing mode being different from the second type identification of the second processing mode, canceling the display of the first associated content in the current processing control, and displaying the second associated content in the current processing control.

5. The method according to claim 2, wherein switching the current processing control from the first processing control to the second processing control comprises:
in response to the existence of the first processing mode and the second processing mode, switching the current processing control from the first processing control to the second processing control.

6. The method according to claim 5, further comprising:
in response to the inexistence of the first processing mode and the existence of the second processing mode, additionally displaying the second processing control in a preset area of the media content display page.

7. The method according to claim 6, wherein additionally displaying the second processing control in the preset area of the media content display page comprises:
in response to the display of a target control in addition to the second processing control in the preset area, keeping the display of the target control and displaying the second processing control at a preset display position of the preset area, and adjusting a display position of the target control in the preset area based on the preset display position; or,
in response to the display of a target control in addition to the second processing control in the preset area, canceling the display of the target control and displaying the second processing control at a preset display position of the preset area, and redisplaying the target control at a target display position of the preset area.

8. The method according to claim 1, wherein after displaying the first media content on the media content display page, the method further comprises:
in response to a first trigger operation for the current processing control, displaying an effect display window of the current processing mode, and displaying, in the effect display window and in a comparative manner, an original media content and an effect media content obtained by processing the original media content using the current processing mode.

9. The method according to claim 8, wherein after displaying an effect display window of the current processing mode, the method further comprises:
in response to a second trigger operation for performing media content processing using the current processing mode, displaying an album page of the user, wherein the album page is configured for selecting a first media content to be processed by the user; and
in response to a selection completion operation on the album page, obtaining a first target media content by using the current processing mode to process the first media content to be processed that the user selects on the album page.

10. The method according to claim 1, wherein after displaying the first media content on the media content display page, the method further comprises:
in response to a third trigger operation for the current processing control, displaying a shooting page, and displaying a preview effect of the current processing mode on the shooting page; and
in response to a shooting operation on the shooting page, obtaining a second target media content by using the current processing mode to process a second media content to be processed that is obtained through shooting.

11. The method according to claim 9 or 10, further comprising:
in response to a media content generation operation, generating a second media content using a target media content, wherein the target media content comprises at least one of the first target media content and the second target media content.

12. The method according to any of claims 1 to 10, wherein the current processing mode comprises at least one of a template, a filter, and an effect.

13. A media content display apparatus, comprising:
an operation receiving module, configured to receive a display operation for a first media content; and
a media content displaying module, configured to display, in response to the display operation and in a media content display page, the first media content, wherein the first media content comprises at least two sub-media contents, a current processing control corresponding to a current processing mode is also displayed within the media content display page, the current processing mode is a media content processing mode adopted by a current sub-media content of the first media content that is currently displayed within the media content display page, and the current processing control is configured to trigger the display of a processing effect of the current processing mode.

14. An electronic device, comprising:
at least one processor; and
a memory being in communication connection with the at least one processor, wherein
the memory stores a computer program executable by the at least one processor, and the computer program, when executed by the at least one processor, causes the at least one processor to perform the media content display method according to any of claims 1 to 12.

15. A computer-readable storage medium, wherein the computer-readable storage medium stores computer instructions, and the computer instructions, when executed by a processor, causes the processor to implement the media content display method according to any of claims 1 to 12.
